# FASCICULE DE BREVET EUROPEEN

(11) **EP 2 583 298 B1**
(45) Date de publication et mention de la délivrance du brevet: **02.04.2014**
(21) Numéro de dépôt: 11725751.9
(22) Date de dépôt: 17.06.2011
(51) Int. Cl.: H01J 1/32, H01J 29/02, H01J 31/48, H01J 31/49, H01J 31/50, H01J 43/10

(54) **DETECTEUR A MULTIPLICATEUR D'ELECTRONS COMPORTANT UNE COUCHE DE NANODIAMANT HAUTEMENT DOPE**
ELEKTRONVERVIELFACHENDER DETEKTOR MIT EINER HOCHDOTIERTEN NANODIAMANTSCHICHT
ELECTRON MULTIPLYING DETECTOR HAVING A HIGHLY DOPED NANODIAMOND LAYER

(30) Priorité: 18.06.2010 FR 1054858
(43) Date de publication de la demande: 24.04.2013
(73) Titulaire: Photonis France, 19100 Brive La Gaillarde (FR)
(72) Inventeur: NÜTZEL, Gert, Delft, 2611 RV (NL); LAVOUTE, Pascal, F-19100 Brive-la-Gaillarde (FR); JACKMAN, Richard, B., Abbots Langley Hertfordshire WD5 0AZ (GB)
(74) Mandataire: Ilgart, Jean-Christophe
(86) Numéro de dépôt international: PCT/EP2011/060076
(87) Numéro de publication internationale: WO 2011/157810

(56) Documents cités:
- EP-A2- 0 841 684
- EP-A2- 0 908 917
- GB-A- 2 081 006
- US-A- 5 680 008
- US-A1- 2002 041 154

## Description

### DOMAINE TECHNIQUE

La présente invention se rapporte au domaine général des systèmes de détection de rayonnement électromagnétique ou de flux ionique comportant un multiplicateur d'électrons en transmission. A titre d'exemple, on peut citer les tubes photomultiplicateurs, les tubes intensificateurs d'image, ou encore, les tubes de détection ionique.

Par multiplicateur d'électrons en transmission, on entend un dispositif apte à recevoir des électrons incidents et à émettre en réponse des électrons dits secondaires en nombre élevé. Les électrons incidents impactent le dispositif sur une face réceptrice et les électrons secondaires sont émis à partir d'une face émettrice opposée.

### ÉTAT DE LA TECHNIQUE ANTÉRIEURE

Classiquement, un système de détection de rayonnement électromagnétique ou de flux ionique comprend un dispositif d'entrée pour recevoir un rayonnement électromagnétique ou un flux ionique et émettre en réponse un flux d'électrons dits primaires, un multiplicateur d'électrons éventuellement en transmission pour recevoir les électrons primaires et émettre en réponse des électrons dits secondaires, et un dispositif de sortie pour recevoir les électrons secondaires et émettre en réponse un signal de sortie, ces différents éléments étant montés dans un boîtier. Le boîtier, fermé en deux extrémités par le dispositif d'entrée et le dispositif de sortie, délimite une chambre intérieure sous vide.

A titre illustratif, dans le cas d'un tube intensificateur d'image, le dispositif d'entrée comprend une photocathode qui reçoit les photons incidents provenant de l'environnement extérieur pour les convertir en photoélectrons suivant un motif correspondant à l'image de l'environnement observé. Le multiplicateur d'électrons amplifie les photoélectrons qui sont ensuite transformés par le dispositif de sortie en un signal lumineux intensifié au moyen d'un écran phosphore, d'un capteur CMOS ou d'un capteur CCD.

Le multiplicateur d'électrons peut comprendre une couche d'un matériau semiconducteur cristallin, par exemple du diamant polycristallin (PCD pour *polycrystalline diamond,* en anglais). Le diamant présente en effet une affinité électronique faible ou négative, ainsi qu'un rendement d'émission secondaire élevé.

Un tube intensificateur d'image comportant une telle couche de diamant semiconducteur est notamment décrit dans le brevet US-6, 657, 385 (US 2002/0041154 A1). Ce document illustre un exemple d'art antérieur de la présente demande. La Figure 8 de ce brevet est reprise ci-après.

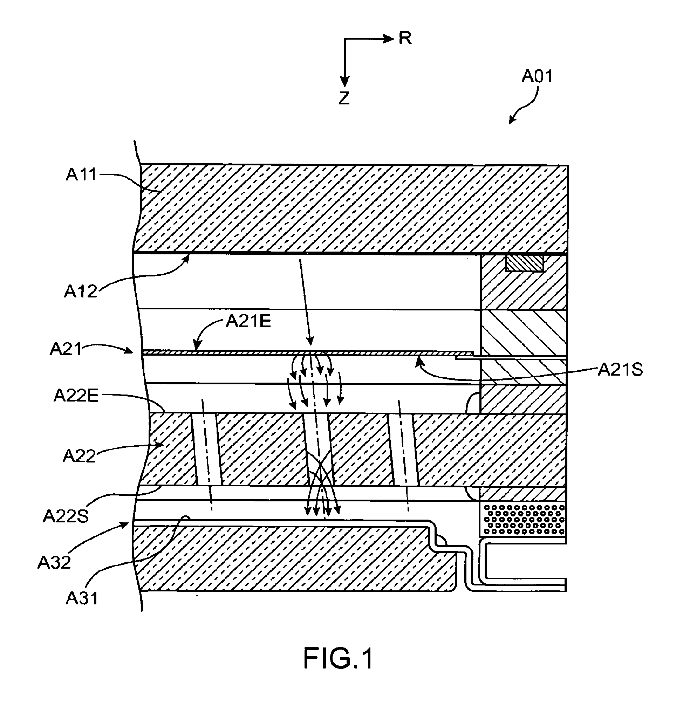

Sur la Figure 1 est représenté en partie un tel tube intensificateur d'image vu en coupe. Le plan de coupe est parallèle à un axe Z appelé axe du tube. Un repère orthogonal (R,Z) en coordonnées cylindriques est représenté où R est la direction radiale du tube A01, et Z est la direction axiale du tube qui est également sensiblement assimilable au sens général de parcours des électrons.

Par sens général de propagation des électrons, on entend le sens de parcours des électrons entre le dispositif d'entrée et le dispositif de sortie.

Suivant la direction Z, le tube A01 comprend une fenêtre d'entrée A11 par laquelle le signal lumineux de l'image à intensifier entre dans le tube et une photocathode A12 déposée sur la face interne de la fenêtre d'entrée A11.

Le tube A01 comporte ensuite un multiplicateur d'électrons qui comprend une couche de diamant polycristallin semiconducteur A21, et une galette de micro-canaux A22 (MCP pour *microchannel plate,* en anglais).

Enfin, le dispositif de sortie comprend un écran phosphore A32 déposé sur la face interne A31 d'une fenêtre de sortie.

La photocathode A12, les faces amont A21E et aval A21S de la couche de diamant A21, les faces amont A22E et aval A22S de la MCP A22, ainsi que l'écran phosphore A32 sont portés à différents potentiels électriques de manière à créer des champs électriques qui orientent et accélèrent les électrons.

Comme le montre la Figure 1, le corps de tube A02 est formé d'une pluralité de bagues métalliques assurant l'alimentation en tension des différentes électrodes sur lesquelles sont brasés de manière étanche des anneaux en matériau isolant.

La couche de diamant polycristallin A21 semiconducteur permet ainsi de générer des électrons secondaires lorsque des électrons incidents pénètrent à l'intérieur de la couche en traversant sa face réceptrice amont A21E.

En effet, lorsque des électrons incidents pénètrent dans la couche de diamant A21, des paires d'électron-trou sont créées, dont les électrons forment les électrons secondaires. Pour permettre à ces derniers d'atteindre la face aval émettrice A21S, un champ électrique est imposé à l'intérieur de la couche de diamant A21, par le biais d'électrodes disposées sur sa face réceptrice A21E et sa face émettrice A21S.

Par ailleurs, pour obtenir un transport des électrons secondaires quasi-balistique à l'intérieur de la couche de diamant et diminuer ainsi les pertes par diffusion, le champ électrique imposé est de l'ordre de 1000kV/cm, pour une couche de diamant d'épaisseur de l'ordre de quelques dixièmes de microns à quelques microns.

La couche de diamant polycristallin peut également présenter une périodicité d'orientation (100), de sorte que l'orientation des joints de grains correspond sensiblement au sens de parcours des électrons, c'est-à-dire à l'axe Z. L'influence des joints de grains sur le transport des électrons secondaires se trouve ainsi diminuée. En effet, les joints de grains forment des zones de diffusion qui perturbent le transport des électrons et diminuent le rendement d'émission secondaire.

En d'autres termes, le transport des électrons secondaires est assuré essentiellement sous forme de courant de dérive, du fait du champ électrique d'intensité élevée imposé entre les faces amont et aval de la couche de diamant, alors que le courant de diffusion est rendu négligeable.

Cependant, un système de détection dont le multiplicateur d'électrons comporte une couche de diamant polycristallin telle que décrite précédemment présente un certain nombre d'inconvénients.

En effet, il est nécessaire de générer un champ électrique d'intensité élevée à l'intérieur de la couche de diamant pour assurer le transport des électrons secondaires jusqu'à la face aval émettrice de la couche de diamant, et pour obtenir un rendement d'émission secondaire acceptable.

Cela implique de prévoir des électrodes de polarisation disposées sur chacune des faces amont et aval de la couche de diamant dans le but de générer le champ électrique. Ces électrodes sont chacune formées d'une couche métallique déposée sur lesdites faces amont et aval. Cependant, ces électrodes de polarisation diminuent la surface de réception des électrons incidents de la face amont ainsi que la surface d'émission d'électrons secondaires de la face aval, ce qui se traduit par une nette diminution de la transmission des électrons, de l'ordre de 30 à 50%.

De plus, pour éviter tout phénomène de claquage, une distance minimale doit être imposée entre la couche de diamant et les éléments situés en amont et en aval, tels que la MCP et l'écran phosphore.

Par ailleurs, le corps de tube doit comporter des bagues métalliques spécialement dédiées à l'alimentation en tension des deux électrodes de polarisation. Ces bagues métalliques sont espacées les unes des autres par le biais d'entretoises électriquement isolantes.

Ces différents aspects impliquent que le tube intensificateur d'image présente un poids et une longueur particulièrement élevés.

De plus, le procédé de réalisation du tube est rendu particulièrement long et complexe, ce qui entraîne un coût important du tube intensificateur d'image.

Par ailleurs, pour augmenter le rendement d'émission secondaire, il importe que l'épaisseur de la couche de diamant soit suffisamment faible pour que les électrons secondaires soient créés à proximité de la face émettrice. Pour cela, il importe que l'épaisseur de la couche de diamant soit légèrement supérieure à la longueur de pénétration des électrons incidents, mais également que cette épaisseur soit du même ordre que la longueur moyenne de diffusion des électrons secondaires, soit quelques dixièmes de micron.

Cependant, une couche de diamant d'une telle épaisseur présente une faible tenue mécanique, ce qui nécessite d'utiliser des moyens de maintien et de renforcement de la couche de diamant.

Un système de détection d'un rayonnement électromagnétique ou d'un flux ionique selon le préambule de la revendication 1 est décrit dans US-5680008, US-2002/0041154, EP-0841684 et EP-0908917.

### EXPOSÉ DE L'INVENTION

L'invention a principalement pour but de présenter un système de détection de rayonnement électromagnétique ou de flux ionique, comportant un multiplicateur d'électrons en transmission comprenant une couche de diamant polycristallin, remédiant au moins en partie aux inconvénients mentionnés précédemment.

Pour ce faire, l'invention a pour objet un système de détection d'un rayonnement électromagnétique ou d'un flux ionique comportant :
- un dispositif d'entrée, pour recevoir le rayonnement électronique ou le flux ionique et émettre en réponse des électrons dits primaires,
- un multiplicateur d'électrons en transmission pour recevoir les électrons primaires et émettre en réponse des électrons dits secondaires, et
- un dispositif de sortie, pour recevoir les électrons secondaires et émettre en réponse un signal de sortie.

Selon l'invention, ledit multiplicateur d'électrons comporte au moins une couche de diamant nanocristallin dopé au Bore avec une concentration supérieure à 5.10¹⁹cm⁻³.

Par couche de diamant nanocristallin (NCD pour *nanocrystalline diamond,* en anglais), on entend une couche de diamant polycristallin PCD dont la taille moyenne de grain est comprise entre quelques nanomètres et quelques centaines de nanomètres, par exemple entre 5nm et 500nm. La taille moyenne de grains peut être de l'ordre de 50nm.

Ainsi, à la différence de la couche de diamant PCD telle que décrite en référence à l'exemple de l'art antérieur, le transport des électrons secondaires à l'intérieur de la couche de diamant B-NCD selon l'invention a lieu essentiellement sous forme d'un courant de diffusion et non sous forme d'un courant de dérive.

En effet, la structure nanocristalline de la couche de diamant B-NCD ainsi que la concentration élevée en atomes de Bore rendent la diffusion des électrons secondaires particulièrement importante et diminuent la mobilité de ceux-ci.

Ce type de transport des électrons secondaires dans la couche de diamant B-NCD selon l'invention présente alors plusieurs avantages.

Il n'est ainsi pas nécessaire d'imposer un champ électrique au sein de la couche de diamant nanocristallin B-NCD pour réaliser le transport des électrons secondaires, dans la mesure où celui-ci est assuré par diffusion des électrons. Les faces réceptrice et émettrice de la couche de diamant B-NCD peuvent donc ne pas être métallisées pour former des électrodes de polarisation nécessaires à la génération du champ électrique dédié à la couche de diamant B-NCD.

Aussi, à la différence de l'art antérieur, les électrons incidents reçus et les électrons secondaires émis ne sont plus captés par les électrodes de polarisation disposées sur les faces de la couche de diamant B-NCD. Le taux de transmission des électrons est ainsi préservé.

Avantageusement, ladite couche de diamant nanocristallin B-NCD présente une concentration de dopage au Bore supérieure à 2.10²⁰cm⁻³, par exemple de l'ordre de 10²¹cm⁻³. La résistivité du matériau est en effet particulièrement faible, puisqu'elle est d'environ 0,8Ωcm pour une concentration en Bore de 2.10²⁰cm⁻³, et diminue à 10⁻²Ωcm pour une concentration de 3.10²¹cm⁻³.

L'épaisseur de la couche de diamant nanocristallin B-NCD peut être comprise entre 0,1µm et 10µm. Elle est avantageusement supérieure à la longueur de pénétration des électrons incidents, par exemple de deux à dix fois la longueur de pénétration. Par longueur de pénétration des électrons incidents, on entend la distance moyenne maximale atteinte par les électrons incidents qui pénètrent dans la couche de diamant B-NCD, mesurée à partir de la face amont réceptrice de celle-ci.

Ladite couche de diamant nanocristallin B-NCD est avantageusement formée par dépôt chimique en phase vapeur, selon des techniques connues de l'homme du métier, et dopé au Bore avec une concentration supérieure à 5.10¹⁹cm⁻³. On peut ainsi obtenir du diamant dont la taille moyenne de grain est comprise entre quelques nanomètres et quelques centaines de nanomètres. Des joints de grains, des défauts d'empilement et des dislocations sont présents. Ainsi, la couche de diamant nanocristallin B-NCD présente une densité très élevée de zones de diffusion. Cela augmente la valeur de la constante de diffusion des électrons secondaires. De plus, la couche de diamant présente une grande masse volumique et ainsi une meilleure tenue mécanique.

Par ailleurs, la couche de diamant nanocristallin B-NCD peut comporter, disposée sur sa face amont réceptrice d'électrons incidents, une électrode de collection de trous destinée à être portée à un potentiel électrique. Cette électrode de collection, lorsqu'elle est portée à un potentiel électrique, forme un réservoir d'électrons permettant la recombinaison des trous supplémentaires générés par les électrons incidents. Ainsi, la charge électrique globale de la couche de diamant nanocristallin B-NCD reste sensiblement constante.

Ladite électrode de collection peut être disposée en bordure de la face amont ou peut s'étendre sur sensiblement toute la face amont de la couche de diamant nanocristallin B-NCD.

Un champ électrique peut être présent à l'intérieur de la couche de diamant nanocristallin B-NCD, et est inférieur ou égal à 10kV/cm, par exemple 10kV/cm, 5kV/cm, 2kV/cm, 1kV/cm ou 0,5kV/cm. Ce champ électrique est alors insuffisant pour générer un courant de dérive des électrons secondaires dans la couche de diamant nanocristallin. Le courant de diffusion des électrons secondaires dans la couche de diamant nanocristallin B-NCD est alors prépondérant. On peut ainsi considérer, en première approximation, que la couche de diamant nanocristallin B-NCD est sensiblement équipotentielle en tout point de son volume.

Par ailleurs, la face aval émettrice d'électrons secondaires de la couche de diamant nanocristallin B-NCD peut être traitée à l'hydrogène ou au césium pour diminuer son affinité électronique. Ainsi, les électrons secondaires qui atteignent la face aval d'émission de la couche de diamant nanocristallin B-NCD sont naturellement extraits de la couche de diamant.

Il est enfin à noter que, dans la mesure où il n'est pas nécessaire d'imposer un champ électrique entre les deux faces de la couche de diamant nanocristallin B-NCD, le boîtier dans lequel est montée la couche de diamant nanocristallin B-NCD n'a pas à comprendre de pièces métalliques destinées à porter à un potentiel déterminé des électrodes disposées sur lesdites faces de la couche de diamant nanocristallin B-NCD. Le boîtier peut néanmoins comporter une pièce métallique électriquement connectée à l'électrode de collection de la face amont de la couche de diamant nanocristallin B-NCD, pour porter cette électrode à un potentiel voulu.

Par ailleurs, la couche de diamant nanocristallin B-NCD peut être disposée dans le système de détection à quelque distance que ce soit de l'élément amont ou aval suivant le sens général de propagation des électrons.

Ainsi, dans le cas où le multiplicateur d'électrons comprend une MCP disposée en aval de la couche de diamant nanocristallin B-NCD suivant le sens général de propagation des électrons, la couche de diamant nanocristallin peut être disposée au contact de la MCP. Plus précisément, la face aval émettrice d'électrons secondaires de la couche de diamant nanocristallin est au contact de la face amont réceptrice de la MCP.

Alternativement, la couche de diamant nanocristallin B-NCD peut être disposée à une distance de la MCP comprise entre quelques microns et quelques centaines de microns, par exemple entre 5µm et 500µm.

De part le contact ou la faible distance entre la couche de diamant nanocristallin B-NCD et la MCP, il n'est pas nécessaire de générer un champ électrique entre la couche de diamant et la MCP.

Il est à noter qu'il n'est pas non plus nécessaire de prévoir une couche de protection disposée sur la MCP, par exemple une couche d'aluminium. Une couche d'aluminium est, selon l'art antérieur, habituellement disposée sur la face amont de la MCP pour protéger le dispositif d'entrée de l'éventuel impact sur celle-ci d'ions positifs.

En effet, dans le cas d'un dispositif d'entrée comprenant une photocathode en GaAs, comme c'est le cas des tubes intensificateurs d'image dits de troisième génération, les propriétés physiques de la photocathode peuvent être particulièrement dégradées par l'impact d'ions positifs. Ces ions positifs proviennent habituellement de la MCP lorsque celle-ci est soumise à un flux d'électrons incidents et émet en réponse des électrons secondaires. La couche de protection permet alors d'éviter que les ions positifs n'impactent la photocathode. Cependant, cette couche de protection a l'inconvénient de réduire de 30% à 50% la transmission des électrons incidents vers la MCP.

A la différence de l'art antérieur, la couche de diamant nanocristallin B-NCD disposée entre le dispositif d'entrée et la MCP intercepte les ions positifs émis par la MCP en direction du dispositif d'entrée. Celle-ci est donc protégée de l'impact des ions positifs, et voit ainsi sa durée de vie préservée. De plus, non seulement la transmission des électrons incidents vers la MCP n'est pas réduite, mais elle est au contraire augmentée du fait du gain élevé de la couche de diamant nanocristallin B-NCD.

De la même manière, la couche de diamant nanocristallin B-NCD peut être disposée au contact du dispositif de sortie ou à faible distance de celui-ci.

Le dispositif de sortie comprend en effet une face réceptrice d'électrons secondaires. La couche de diamant nanocristallin B-NCD peut donc être disposée de sorte que sa face aval émettrice soit au contact de la face réceptrice du dispositif de sortie.

Alternativement, la couche de diamant nanocristallin B-NCD peut être disposée à une distance du dispositif de sortie comprise entre quelques microns et quelques centaines de microns, par exemple entre 5µm et 500µm.

Ici également, du fait du contact ou de la faible distance entre la couche de diamant nanocristallin B-NCD et le dispositif de sortie, il n'est pas nécessaire de générer un champ électrique entre la couche de diamant nanocristallin B-NCD et le dispositif de sortie.

Le multiplicateur d'électrons peut comporter plusieurs couches de diamant nanocristallin B-NCD selon l'invention. Lesdites couches sont disposées les unes sur les autres suivant le sens général de propagation des électrons, et sont espacées les unes des autres.

Ainsi, le système de détection peut comporter une première couche de diamant nanocristallin B-NCD au contact d'une MCP située en aval de celle-ci, et une seconde couche de diamant nanocristallin B-NCD au contact du dispositif de sortie, tel que décrit précédemment.

Enfin, il est à noter que le boîtier du système de détection comprend moins de pièces à assembler que celui de l'art antérieur cité précédemment. Les risques de défaut d'étanchéité entre les pièces formant le boîtier sont alors réduits. De plus, le boîtier est plus court et plus léger, ce qui répond aux contraintes habituelles d'utilisation des systèmes de détection tels que les tubes intensificateurs d'image, les tubes photomultiplicateurs et les tubes de détection de flux ionique.

Le système de détection selon l'invention peut être un tube intensificateur d'image. Le dispositif de sortie peut alors comprendre un écran phosphore, un capteur CCD ou un capteur CMOS.

Le système de détection selon l'invention peut être un tube photomultiplicateur. Le dispositif de sortie peut alors comprendre au moins une anode.

Dans ces deux cas, le dispositif d'entrée peut comprendre une photocathode formée de SbK₂Cs ou de GaAs.

Le système de détection selon l'invention peut être un tube de détection d'un flux ionique. Le dispositif d'entrée est alors sensible audit flux ionique et émet en réponse des électrons primaires. Le dispositif de sortie peut comprendre au moins une anode.

D'autres avantages et caractéristiques préférées de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
La Figure 1, déjà décrite, est une vue partielle en coupe longitudinale d'un tube intensificateur d'image selon un exemple de l'art antérieur ;
La Figure 2 est une vue schématique en coupe longitudinale d'un système de détection selon l'invention, dans lequel une couche de diamant nanocristallin est disposée au contact d'une galette de micro-canaux ;
La Figure 3 est une vue schématique en coupe longitudinale d'un système de détection selon l'invention, dans lequel une couche de diamant nanocristallin est disposée à faible distance d'une galette de micro-canaux ;
La Figure 4 est une vue schématique en coupe longitudinale d'un système de détection selon l'invention, dans lequel une couche de diamant nanocristallin est disposée au contact d'un écran phosphore ;
La Figure 5 est une vue schématique en coupe longitudinale d'un système de détection selon l'invention, dans lequel une couche de diamant nanocristallin est disposée à faible distance d'un écran phosphore ;
La Figure 6 est une vue schématique en coupe longitudinale d'un système de détection selon l'invention, dans lequel le multiplicateur d'électrons comprend une pluralité de couches de diamant nanocristallin.

### EXPOSÉ DÉTAILLÉ D'UN MODE DE RÉALISATION PRÉFÉRÉ

Le système de détection selon l'invention décrit en détail par la suite est un tube intensificateur d'image. Cependant, il peut concerner également un tube photomultiplicateur ou un tube de détection d'un flux ionique.

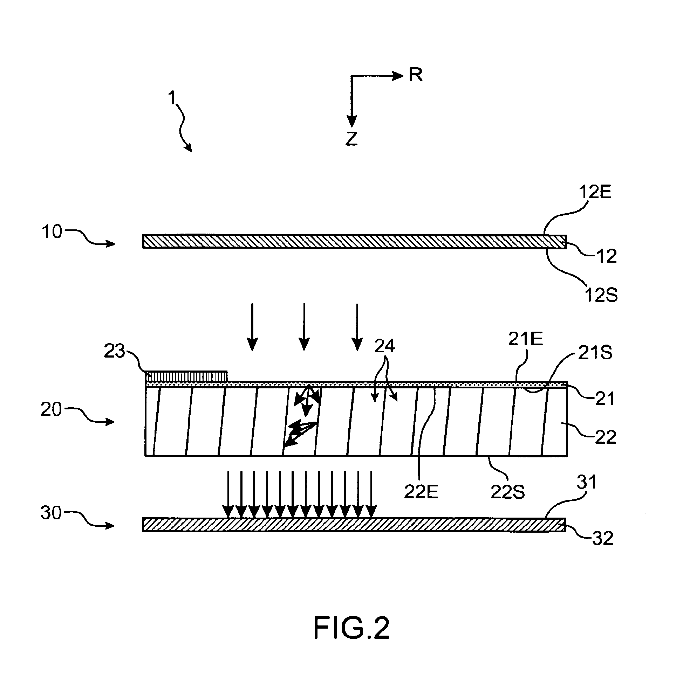

La Figure 2 illustre partiellement et de manière schématique un tube intensificateur d'image selon un premier mode de réalisation de l'invention.

Il est à noter que les échelles ne sont pas respectées, pour privilégier la clarté du dessin.

Dans toute la description qui va suivre, on utilise un repère orthonormé (R,Z) en coordonnées cylindriques où R est la direction radiale du tube et Z est la direction axiale du tube qui est également sensiblement assimilable au sens général de propagation des électrons.

Par ailleurs, les termes « amont » et « aval » utilisés par la suite sont ici à comprendre en termes d'orientation suivant la direction Z du repère (R,Z).

Sur la Figure 2 est représenté un tube 1 intensificateur d'image selon le premier mode de réalisation de l'invention. Le tube 1 présente une forme sensiblement cylindrique ou tubulaire suivant l'axe Z. Cependant, le tube 1 peut également présenter une forme de section carrée, rectangulaire, hexagonale, ou toute autre forme.

Le tube 1 comprend trois éléments principaux disposés suivant la direction Z, c'est-à-dire un dispositif d'entrée 10, un multiplicateur d'électrons 20 et un dispositif de sortie 30. Le tube 1 comprend également un corps de tube (non représenté) dont la fonction est d'assurer la tenue mécanique des trois éléments 10, 20, 30 cités précédemment, de définir en coopération avec les éléments 10 et 30 une chambre étanche, et de permettre l'alimentation en tension des différentes électrodes qui seront décrites plus loin. Les trois éléments 10, 20, 30 sont sensiblement alignés suivant l'axe du tube Z.

Le multiplicateur d'électrons 20 comprend une couche de diamant nanocristallin 21 dopé au Bore (B-NCD) avec une concentration supérieure à 5.10¹⁹cm⁻³, et une galette de micro-canaux (MCP) 22. Selon le premier mode de réalisation de l'invention, la couche de diamant B-NCD 21 est disposée au contact de la MCP 22.

Le dispositif d'entrée 10 comprend une fenêtre d'entrée (non représentée) par laquelle arrivent dans le tube 1 les photons à intensifier émis par un environnement extérieur au tube 1. La fenêtre d'entrée transparente, par exemple en verre, peut être remplacée par une fibre optique. La fenêtre d'entrée comporte une surface interne sur laquelle est déposée une couche photoémissive d'une photocathode 12. La photocathode comprend une surface d'entrée 12E en contact avec la surface interne de la fenêtre d'entrée, et une surface de sortie 12S opposée à la surface d'entrée 12E suivant la direction Z. Lorsque les photons incidents impactent sur la surface d'entrée 12E de la couche photoémissive, par effet photoélectrique, des photoélectrons sont émis par la surface de sortie 12S de la couche photoémissive, en direction du multiplicateur d'électrons 20.

Le multiplicateur d'électrons 20 est disposé entre la photocathode 12 et le dispositif de sortie 30, suivant l'axe Z du tube. Il reçoit les électrons primaires émis par la photocathode 12 et émet en réponse des électrons dits secondaires en direction du dispositif de sortie sensiblement suivant l'axe Z.

Le multiplicateur d'électrons 20 comprend la couche de diamant nanocristallin 21 dopé au Bore (B-NCD) et la galette de micro-canaux (MCP) 22, ces éléments étant assemblés chacun au corps de tube.

La couche de diamant B-NCD présente une concentration en Bore supérieure à 5.10¹⁹cm⁻³. Ainsi, les atomes de Bore introduits dans la couche de diamant B-NCD sont des impuretés qui contribuent à la densité de porteurs de charge. Les porteurs de charge sont ici des trous dans la mesure où ces atomes sont de type accepteur.

De préférence, la concentration est supérieure à 2.10²⁰cm-³, par exemple 10²¹m⁻³. Une couche de diamant B-NCD dopé au Bore avec une telle concentration présente une résistivité qui diminue à mesure qu'augmente la concentration de Bore. Ainsi, pour une concentration en Bore de l'ordre de 10²¹cm⁻³, la résistivité est de l'ordre de 10⁻²Ωcm à 295K, comme le montre l'article de Gajewski et al. intitulé «Electronic and optical properties of boron-doped nanocrystalline diamond films», 2009, Phys. Rev. B, 79, 045206.

Il est à noter que la mobilité des électrons secondaires est du même ordre de grandeur que celle des trous, comme le montre l'article de Isberg et al. intitulé «High carrier Mobility in Single-Crystal Plasma-Deposited Diamond», 2002, Science, 297, 1670.

La couche de diamant B-NCD 21 comprend une face amont 21E réceptrice d'électrons incidents provenant de la photocathode 12 et une face aval 21S émettrice d'électrons secondaires opposée à la face amont 21E.

Comme décrit précédemment, le transport des électrons secondaires au sein de la couche de diamant B-NCD se fait principalement sous forme d'un courant de diffusion et non pas sous forme d'un courant de dérive. En effet, la couche de diamant B-NCD présente des tailles de grain particulièrement faibles, ce qui se traduit par la formation d'un réseau aléatoire dense de joints de grains qui agissent comme des zones de diffusion vis-à-vis des électrons secondaires. De plus, aux concentrations élevées de Bore, la densité d'atomes de Bore devient proche de la densité du diamant. Les atomes de Bore participent également à augmenter la diffusion des électrons secondaires dans le matériau.

Le courant de diffusion porte sur les électrons secondaires principalement.

En effet, lorsque des électrons incidents pénètrent dans la couche de diamant B-NCD 21, des paires électron-trou sont créées localement, à proximité de la face amont de réception 21E.

Les trous issus des paires électron-trou, appelés ici trous supplémentaires pour les distinguer des trous issus du dopage au Bore, ne forment pas un gradient de densité important vis-à-vis du reste de la couche de diamant B-NCD 21, dans la mesure où la concentration en Bore est sensiblement uniforme et particulièrement élevée.

Cependant, la création des paires électron-trou conduit à l'apparition d'un gradient de densité d'électrons secondaires important. Du fait de ce gradient de densité, les électrons secondaires diffusent dans les zones de moindre densité d'électrons secondaires, jusqu'à la face aval d'émission.

Une zone de la face amont 21E de la couche de diamant B-NCD 21 est métallisée pour former une électrode de collection de trous. Cette électrode de collection 23 est située en bordure de la face amont 21E, à proximité du corps de tube.

Alternativement, l'électrode de collection 23 de la face amont 21E de la couche de diamant B-NCD 21 peut s'étendre sur sensiblement toute la surface de ladite face 21E, et peut présenter une forme de grille à large maille.

Comme décrit précédemment, cette électrode de collection 23 est portée à un potentiel électrique, et forme ainsi un réservoir d'électrons pour la couche de diamant 21. Cette source d'électrons fournit des électrons permettant aux trous supplémentaires de se recombiner. Ainsi, la couche de diamant 21 présente une charge globale sensiblement constante à mesure qu'elle reçoit des électrons incidents et émet des électrons secondaires.

La couche de diamant B-NCD est disposée à proximité de la photocathode 12, à une distance de quelques dizaines ou centaines de microns, par exemple 50µm ou 150µm.

De plus, la couche de diamant B-NCD 21 est disposée au contact de la MCP 22. Plus précisément, la face aval 21S émettrice d'électrons secondaires de la couche de diamant nanocristallin 21 est au contact de la face amont 22E réceptrice de la MCP 22.

Pour diminuer l'affinité électronique de la couche de diamant B-NCD 21, la face aval 21S de celle-ci est traitée à l'hydrogène ou au césium. Ainsi, les électrons secondaires qui atteignent la face aval 21S peuvent s'en extraire naturellement.

La couche de diamant B-NCD 21 présente une épaisseur comprise entre 0,1µm et 10µm. Elle est avantageusement supérieure à la longueur de pénétration des électrons incidents, par exemple de l'ordre de deux à dix fois la longueur de pénétration.

La longueur de pénétration dépend de l'énergie des électrons incidents. A titre d'exemple, des électrons incidents dont l'énergie est de 5keV ou de 15keV pénètrent dans la couche de diamant B-NCD 21 sur une distance d'environ 0,25µm ou 2µm, respectivement.

Ainsi, les électrons incidents génèrent des paires électron-trou essentiellement à proximité de la face amont réceptrice 21E. Les électrons secondaires ainsi créés diffusent jusqu'à la face aval émettrice de la couche de diamant 21, alors que les trous supplémentaires se recombinent avec les électrons fournis par l'électrode de collection 23.

Ladite couche de diamant B-NCD 21 est avantageusement formée à l'aide de techniques connues de dépôt chimique en phase vapeur. On peut ainsi obtenir du diamant dont la taille moyenne de grain est comprise entre quelques nanomètres et quelques centaines de nanomètres. Des joints de grains, des défauts d'empilement et des dislocations sont présents. Ainsi, la couche de diamant B-NCD 21 présente une densité très élevée de zones de diffusion. Cela rend la mobilité des électrons secondaires particulièrement faible et augmente la valeur de la constante de diffusion. De plus, la couche de diamant B-NCD 21 présente une grande masse volumique et ainsi une meilleure tenue mécanique.

Le multiplicateur d'électrons 20 comprend en outre une MCP 22 disposée en aval de la couche de diamant B-NCD 21 et au contact de celle-ci.

Elle comprend une face amont 22E réceptrice d'électrons incidents, ici les électrons secondaires émis par la couche de diamant B-NCD, et une face aval 22S d'émission d'électrons secondaires opposée à la surface d'entrée 22E suivant la direction Z.

La MCP 22 est traversée d'une pluralité de micro-canaux 24 de la face amont 22E à la face aval 22S, de sorte qu'un électron incident qui pénètre dans un micro-canal 24 provoque la génération en cascade d'un grand nombre d'électrons secondaires.

Plus précisément, lorsqu'un photoélectron incident entre dans un micro-canal 24 et heurte la paroi intérieure du micro-canal 24, des électrons secondaires sont générés, qui, en venant à leur tour heurter la paroi, génèrent également d'autres électrons secondaires. Les électrons sont dirigés et accélérés, par un champ électrique imposé entre les faces amont 22E et aval 22S de la MCP 22, vers la sortie du micro-canal 24 située dans la surface de sortie 22S de la MCP 22. Les électrons sont ensuite orientés et accélérés vers le dispositif de sortie 30 par un champ électrique.

Le dispositif de sortie 30 est situé à une distance de la MCP 22 comprise entre quelques dizaines de microns à quelques centaines de microns, par exemple 50, 100 ou 150µm.

Il comprend une face de réception 31 des électrons secondaires provenant du multiplicateur d'électrons 20, plus précisément de la MCP 22.

Il peut comprendre un écran phosphore 32 déposé sur la surface interne 31 d'une fenêtre de sortie. La fenêtre de sortie, par exemple en verre, transmet optiquement le signal lumineux intensifié à l'extérieur du tube 1. La fenêtre de sortie peut être remplacée par une fibre optique. L'écran phosphore 32 est disposé parallèlement à la surface de sortie 22S de la MCP 22 et en regard de cette surface 22S de sorte que les électrons secondaires générés par la MCP 22 viennent y impacter. L'écran phosphore 32 comprend une couche de phosphore ou de tout autre matériau apte à émettre un photon lorsqu'il reçoit un électron d'énergie suffisante.

Ainsi, le motif de l'image incidente est reproduit par l'écran phosphore 32 par les photons émis par le phosphore excité. Les photons sont ensuite transmis à l'extérieur du tube 1 par l'intermédiaire de la fenêtre de sortie ou d'une fibre optique.

Alternativement à l'écran phosphore, le dispositif de sortie peut comprendre un capteur CCD ou un capteur CMOS.

Des champs électriques sont imposés entre différents éléments du tube intensificateur d'image pour diriger et accélérer les électrons primaires ou secondaires. Ainsi, un premier champ électrique est généré entre la photocathode 12 et la face amont 22E de la MCP 22.

La couche de diamant B-NCD 21 est ainsi située dans un champ électrique généré entre une première électrode située au niveau de la photocathode 12 et une seconde électrode située au niveau de la face amont 22E de la MCP 22.

Ce champ électrique subi, habituellement appelé champ de pénétration, peut présenter une intensité inférieure à 10kV/cm, par exemple de l'ordre de 10, 5, 2, 1kV/cm, voire 0,5kV/cm. Cette intensité n'est cependant pas suffisante pour assurer le transport des électrons secondaires essentiellement par un courant de dérive dans la couche de diamant B-NCD. On peut ainsi considérer, en première approximation, que la couche de diamant B-NCD se trouve, en tout point de son volume, sensiblement à un même potentiel électrique.

Il est à noter que la constante diélectrique de la couche de diamant B-NCD est de l'ordre de 5,7.

Le courant de dérive éventuellement présent dans la couche de diamant B-NCD reste négligeable vis-à-vis du courant de diffusion.

Un second champ électrique est appliqué entre les deux faces amont 22E et aval 22S de la MCP 22. Ainsi, les électrons secondaires générés dans les micro-canaux 24 de la MCP 22 sont dirigés et accélérés vers la face aval 22S de celle-ci. Ce second champ électrique peut présenter une intensité de l'ordre de 20kV/cm.

Ce champ est généré par deux électrodes situées au niveau des faces amont 22E et aval 22S de la MCP. Ainsi, une fine couche métallique est disposée sur la face amont 22E de la MCP, sous forme, de préférence, d'une grille à large maille. Cette couche métallique est située entre la couche de diamant B-NCD 21 et la face amont 22E de la MCP. Une seconde fine couche métallique est disposée sur la face aval 22S de la MCP, sous forme, de préférence, d'une grille à large maille.

Enfin, un troisième champ est imposé entre la MCP 22 et le dispositif de sortie 30. Plus précisément, la face réceptrice 31 d'électrons secondaires du dispositif de sortie 30 comporte une fine couche métallique, par exemple une grille à large maille, portée à un potentiel. Cette électrode coopère avec l'électrode située au niveau de la face aval 22S émettrice de la MCP 22 pour générer le troisième champ électrique. Ainsi, les électrons secondaires émis par la MCP 22 sont dirigés et accélérés vers le dispositif de sortie 30. Ce troisième champ électrique peut présenter une intensité de l'ordre de 120kV/cm.

Les différentes électrodes qui viennent d'être décrites sont portées chacune à un potentiel par le biais d'éléments métalliques formant en partie le corps de tube. Chaque élément métallique du corps de tube est électriquement isolé de l'élément métallique voisin par un élément en matériau diélectrique, pour éviter tout phénomène de court-circuit.

Il est à noter que l'électrode de collection de trous 23 peut être également une électrode de polarisation et participer ainsi à la génération des champs électriques, de préférence lorsqu'elle s'étend sur toute la surface amont 21E de la couche de diamant B-NCD 21.

Le premier champ électrique est alors généré entre la photocathode 12 et l'électrode de collection de trous 23, ou entre la photocathode 12 et la couche de diamant B-NCD 21 dans la mesure où celle-ci est sensiblement équipotentielle. La valeur du potentiel électrique de la couche de diamant 21 est ici celle de l'électrode 23 de collection de trous et de polarisation.

Le second champ électrique est généré entre l'électrode de collection de trous 23, ou la couche de diamant 21, et la face amont 22E de la MCP 22.

Comme précédemment, des champs électriques sont également générés dans la MCP 22 d'une part, et entre la MCP 22 et le dispositif de sortie 30 d'autre part.

Le potentiel électrique de l'électrode de collection de trous 23 et celui de l'électrode disposée sur la face amont 22E de la MCP 22 peuvent être identiques.

Le principe de fonctionnement du tube intensificateur d'image selon le premier mode de réalisation est le suivant.

Lorsque des photons incidents impactent la photocathode 12 du dispositif d'entrée 10, celle-ci émet en réponse des photoélectrons, dits primaires, à partir de sa face émettrice 12S.

Les photoélectrons sont dirigés et accélérés vers la couche de diamant B-NCD 21 par le premier champ électrique généré entre la photocathode 12 et la MCP 22.

Les électrons primaires impactent la face amont 21E de la couche de diamant 21 et créent, dans celle-ci, un grand nombre de paires électron-trou. Les électrons créés forment les électrons secondaires.

De par le gradient spatial d'électrons secondaires dans la couche de diamant 21, ceux-ci diffusent jusqu'à la face aval émettrice 21S et sont émis hors de la couche de diamant. Les trous générés se recombinent avec des électrons fournis par l'électrode de collection 23 de la face amont 21E de la couche de diamant.

Les électrons secondaires sont dirigés et accélérés vers la MCP 22 par le premier champ électrique décrit ci-dessus. Ils entrent ensuite dans les micro-canaux 24 de la MCP 22 et génèrent un grand nombre d'autres électrons secondaires. Ceux-ci sont dirigés et accélérés vers la sortie des micro-canaux 24, c'est-à-dire vers la face aval 22S de la MCP 22, par le second champ électrique imposé entre les deux faces de celle-ci.

Ces électrons secondaires générés par la MCP 22 sont ensuite dirigés et accélérés de la MCP 22 vers le dispositif de sortie 30 par le troisième champ électrique.

Le dispositif de sortie 30 reçoit les électrons secondaires de la MCP 22 et produit un signal lumineux intensifié en réponse, par le biais de l'écran phosphore, du capteur CCD ou d'un capteur CMOS qui équipe le dispositif de sortie.

Il est à noter que la couche de diamant B-NCD peut être réalisée par une étape de dépôt chimique en phase vapeur, selon des techniques connues de l'homme du métier, et d'une étape de dopage au Bore. Un exemple de réalisation est décrit dans l'article de Gajewski et a1. intitulé «Electronic and optical properties of boron-doped nanocrystalline diamond films», 2009, Phys. Rev. B, 79, 045206.

Des germes sont déposés sur un substrat en quartz ou silicium monocristallin sous ultrasons à partir d'une solution contenant de la poudre de nanodiamant.

La couche de diamant est obtenue par croissance à partir des germes par dépôt chimique en phase vapeur, avec un plasma CH₄/H₂ dont la concentration en CH₄ inférieure ou égale à 5%. Le dopage en Bore est obtenu par l'ajout de TriméthylBoron (TMB) dans le gaz de phase, avec un rapport Boron sur Carbone jusqu'à 6600ppm.

Le substrat est ensuite enlevé par voie chimique, à l'aide de techniques bien connues de l'homme du métier.

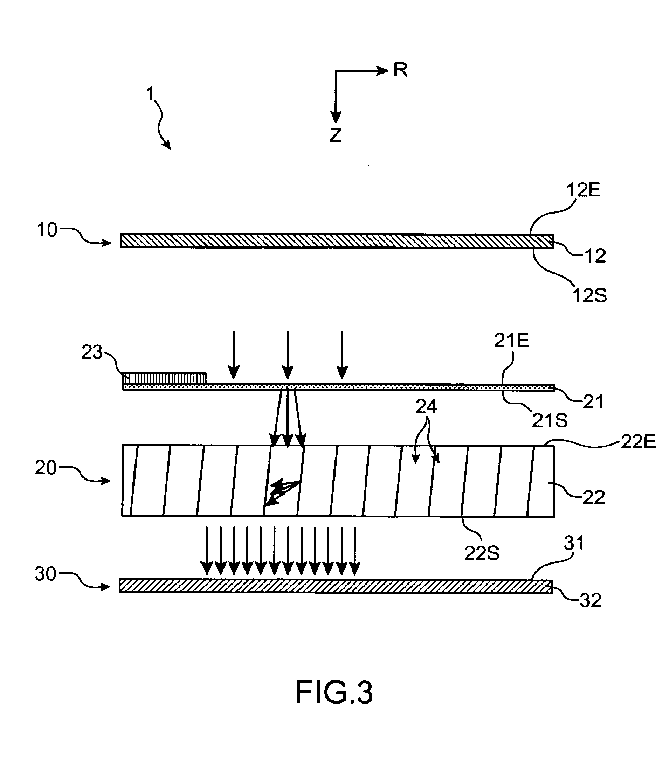

La Figure 3 est une vue partielle et schématique d'un tube intensificateur d'image selon une variante du premier mode de réalisation de l'invention.

Les références numériques identiques à celles de la Figure 2 précédemment décrite désignent des éléments identiques ou similaires.

Le tube intensificateur d'image selon cette variante se distingue du premier mode de réalisation décrit précédemment en ce que la couche de diamant B-NCD 21 est disposée à une distance de la MCP 22 comprise entre quelques microns et quelques centaines de microns, par exemple entre 5µm et 500µm, et de préférence entre 30µm et 500µm, par exemple 50µm.

Comme le montre la Figure 3, l'électrode de collection 23 peut être disposée en bordure de la face amont 21E de la couche de diamant.

Alternativement, l'électrode de collection 23 de la face amont 21E de la couche de diamant B-NCD 21 peut s'étendre sur sensiblement toute la surface de ladite face 21E, et peut présenter une forme de grille à large maille.

Le fonctionnement du tube intensificateur d'image selon cette variante est similaire à celui du tube décrit précédemment et n'est pas repris ici.

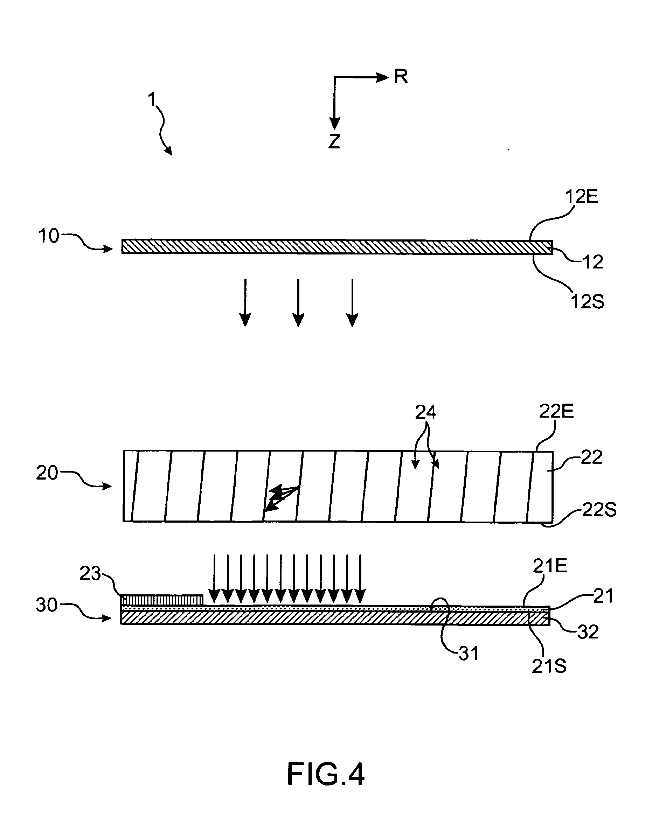

La Figure 4 est une vue partielle et schématique d'un tube intensificateur d'image selon un second mode de réalisation de l'invention.

Les références numériques identiques à celles de la Figure 2 précédemment décrite désignent des éléments identiques ou similaires.

Le tube intensificateur d'image selon ce mode de réalisation se distingue essentiellement du premier mode de réalisation décrit en référence à la Figure 2 en ce que la couche de diamant B-NCD 21 est disposée entre la MCP 22 et le dispositif de sortie 30, et au contact de celui-ci.

Il n'est donc pas nécessaire de générer un champ électrique entre la couche de diamant B-NCD 21 et le dispositif de sortie 30.

Le fonctionnement du tube intensificateur d'image selon ce mode de réalisation est similaire à celui du tube décrit précédemment et n'est pas repris ici.

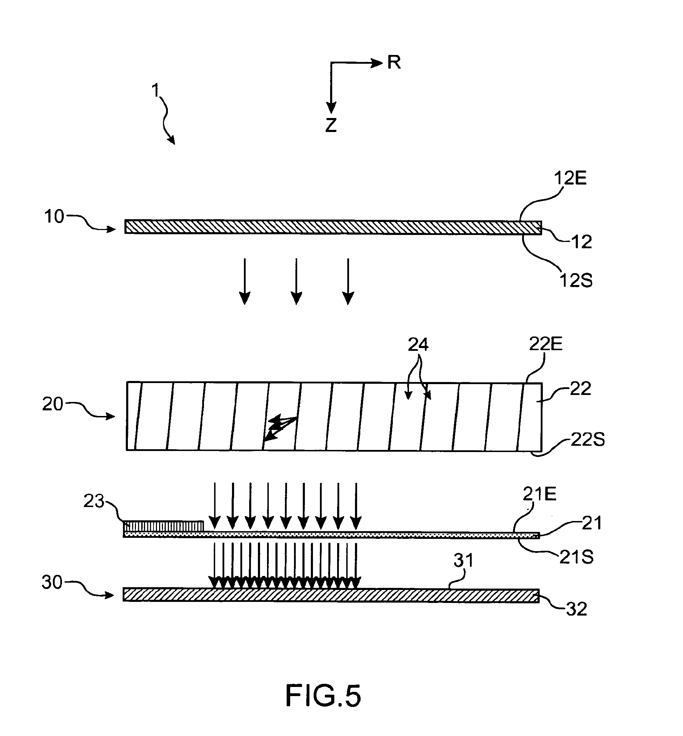

La Figure 5 est une vue partielle et schématique d'un tube intensificateur d'image selon une variante du second mode de réalisation de l'invention.

Les références numériques identiques à celles de la Figure 4 précédemment décrite désignent des éléments identiques ou similaires.

Le tube intensificateur d'image selon cette variante se distingue du second mode de réalisation décrit précédemment en ce que la couche de diamant B-NCD 21 est disposée à une distance du dispositif de sortie 30 comprise entre quelques microns et quelques centaines de microns, par exemple entre 5µm et 500µm, et de préférence entre 30µm et 500µm, par exemple 50µm.

Comme le montre la Figure 5, l'électrode de collection 23 peut être disposée en bordure de la face amont 21E de la couche de diamant.

Alternativement, l'électrode de collection 23 de la face amont 21E de la couche de diamant B-NCD 21 peut s'étendre sur sensiblement toute la surface de ladite face, et peut présenter une forme de grille à large maille.

Un champ électrique peut être imposé entre la couche de diamant B-NCD 21 et le dispositif de sortie 30. L'intensité du champ peut être de l'ordre de 100kV/cm lorsque la couche de diamant B-NCD 21 et le dispositif de sortie 30 sont espacés l'un de l'autre d'une distance de l'ordre de quelques centaines de microns, par exemple 500µm.

La couche de diamant B-NCD 21 est considérée comme équipotentielle, et présente un potentiel électrique imposé par l'électrode 23 de collection de trous, qui agit alors comme électrode de polarisation. En effet, comme décrit précédemment, le champ électrique présent à l'intérieur de la couche de diamant B-NCD 21, dit champ subi ou champ de pénétration, est considéré comme négligeable, de sorte que le courant de dérive des électrons secondaires dans les couches de diamant 21 est négligeable par rapport au courant de diffusion desdits électrons secondaires. La couche de diamant B-NCD 21 peut donc être considérée, en première approximation, en tout point de son volume, sensiblement à un même potentiel électrique.

Le fonctionnement du tube intensificateur d'image selon cette variante est similaire à celui du tube décrit précédemment et n'est pas repris ici.

Bien entendu, dans le cadre du second mode de réalisation et de sa variante, le multiplicateur d'électrons peut comporter en outre une seconde couche de diamant B-NCD identique à celle disposée à proximité du dispositif de sortie. Cette seconde couche de diamant B-NCD peut être disposée entre la photocathode et la MCP, au contact ou à distance de cette dernière, tel que décrit dans le premier mode de réalisation et sa variante.

La photocathode est alors protégée contre l'impact des ions positifs. De plus, le gain global du multiplicateur d'électrons est augmenté, dans la mesure où il comprend une MCP et deux couches de diamant B-NCD.

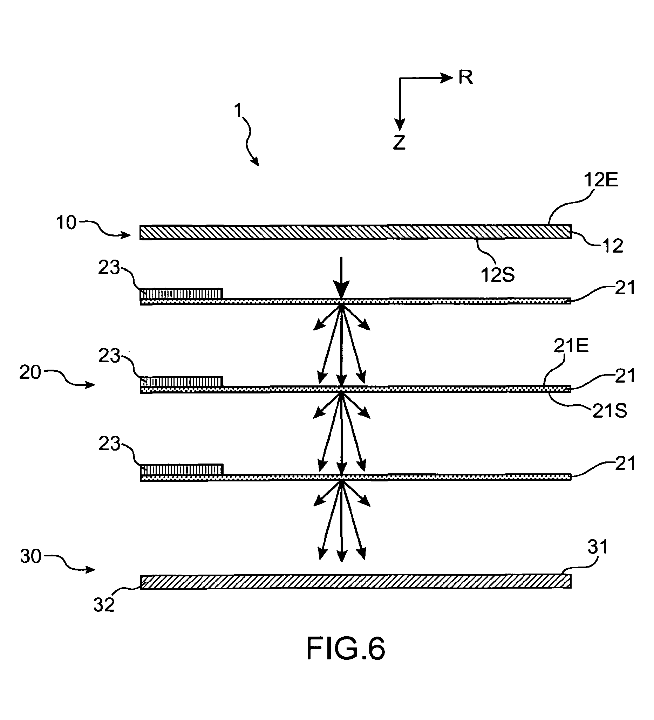

La Figure 6 est une vue partielle et schématique d'un tube intensificateur d'image selon un troisième mode de réalisation.

Les références numériques identiques à celles de la Figure 2 précédemment décrite désignent des éléments identiques ou similaires.

Le tube intensificateur d'image selon cette variante se distingue du premier mode de réalisation décrit précédemment en ce que le multiplicateur d'électrons ne comprend plus de MCP mais au contraire une pluralité de couches de diamant B-NCD 21 disposées les unes sur les autres suivant l'axe Z du tube et espacées les unes des autres.

Les couches de diamant peuvent être disposées à une distance les unes des autres comprise entre quelques microns et quelques centaines de microns, par exemple entre 5µm et 500µm, et de préférence entre 30µm et 500µm, par exemple 50µm.

Comme le montre la Figure 6, l'électrode de collection 23 peut être disposée en bordure de la face amont 21E de la couche de diamant.

Alternativement, l'électrode de collection 23 de la face amont 21E de chaque couche de diamant B-NCD 21 peut s'étendre sur sensiblement toute la surface de ladite face, et peut présenter une forme de grille à large maille.

Un champ électrique est généré entre une première électrode située au niveau de la photocathode 12 et une seconde électrode située au niveau du dispositif de sortie 30.

Alternativement, des champs électriques peuvent être imposés, respectivement, entre la photocathode 12 et la première couche de diamant B-NCD 21, entre lesdites couches de diamant B-NCD 21, et entre la dernière couche de diamant B-NCD 21 et le dispositif de sortie 30. L'intensité du champ électrique entre la photocathode 12 et la première couche de diamant B-NCD 21 peut être de l'ordre de 20kV/cm, et l'intensité du champ électrique entre la dernière couche de diamant B-NCD 21 et le dispositif de sortie 30 peut être de l'ordre de 100kV/cm.

Les couches de diamant B-NCD 21 sont considérées comme équipotentielles, et présentent un potentiel électrique imposé par leur électrode 23 de collection de trous respective, qui agit alors comme électrode de polarisation.

Le champ électrique présent à l'intérieur de chaque couche de diamant B-NCD 21 est considéré comme négligeable, de sorte que le courant de dérive des électrons secondaires dans les couches de diamant 21 est négligeable par rapport au courant de diffusion desdits électrons secondaires. Chaque couche de diamant B-NCD 21 est considérée, en première approximation, en tout point de son volume, sensiblement à un même potentiel électrique.

Le fonctionnement du tube intensificateur d'image selon cette variante est similaire à celui du tube décrit précédemment et n'est pas repris ici.

Comme il a été mentionné précédemment, l'invention n'est pas limitée aux tubes intensificateurs d'image.

Le système de détection peut ainsi être un tube photomultiplicateur. Le dispositif d'entrée peut être identique ou similaire à celui-ci décrit précédemment. En revanche, le dispositif de sortie est différent et comprend une unique anode ou une pluralité d'anodes. Le multiplicateur d'électrons est identique à celui décrit précédemment en référence aux Figures 2 à 6.

Le système de détection peut également être un tube de détection de flux ionique. Le dispositif d'entrée comprend alors une couche photoémissive sensible au flux ionique pour émettre en réponse des électrons dits primaires. Le dispositif de sortie peut comprendre, comme pour le tube photomultiplicateur, une unique anode ou une pluralité d'anodes. Le multiplicateur d'électrons est identique à celui décrit précédemment en référence aux Figures 2 à 6.

Bien entendu, diverses modifications peuvent être apportées par l'homme du métier à l'invention qui vient d'être décrite, uniquement à titre d'exemples non limitatifs.

## Revendications

1. Système de détection d'un rayonnement électromagnétique ou d'un flux ionique comportant :
- un dispositif d'entrée (10), pour recevoir le rayonnement électronique ou le flux ionique et émettre en réponse des électrons dits primaires,
- un multiplicateur d'électrons (20) en transmission pour recevoir les électrons primaires et émettre en réponse des électrons dits secondaires, et
- un dispositif de sortie (30), pour recevoir les électrons secondaires et émettre en réponse un signal de sortie,
**caractérisé en ce que** ledit multiplicateur d'électrons (20) comporte au moins une couche de diamant nanocristallin (21) dopé au Bore avec une concentration supérieure à 5.10¹⁹cm⁻³.

2. Système de détection selon la revendication 1, **caractérisé en ce que** ladite couche de diamant nanocristallin (21) présente une concentration de dopage au Bore supérieure à 2.10²⁰cm⁻³.

3. Système de détection selon la revendication 1 ou 2, **caractérisé en ce que** l'épaisseur de la couche de diamant nanocristallin (21) est comprise entre 0,1µm et 10µm.

4. Système de détection selon l'une quelconque des revendications 1 à 3, **caractérisé en ce que** ladite couche de diamant nanocristallin (21) est formée par dépôt chimique en phase vapeur.

5. Système de détection selon l'une quelconque des revendications 1 à 4, **caractérisé en ce que** la couche de diamant nanocristallin (21) comprend une face amont (21E) pour recevoir des électrons incidents, et une face aval (21S) pour émettre en réponse des électrons secondaires, ladite face amont (21E) comportant une électrode de collection de trous (23) destinée à être portée à un potentiel électrique.

6. Système de détection selon la revendication 5, **caractérisé en ce que** ladite électrode de collection (23) est située en bordure de ladite face amont (21E), ou s'étend sur sensiblement toute la face amont (21E).

7. Système de détection selon l'une quelconque des revendications 1 à 6, **caractérisé en ce qu'**un champ électrique, présent à l'intérieur de la couche de diamant nanocristallin (21), est inférieur ou égal à 10kV/cm.

8. Système de détection selon l'une quelconque des revendications 1 à 7, **caractérisé en ce que** la couche de diamant nanocristallin (21) présente une face aval (21S) pour émettre des électrons secondaires, ladite face aval (21S) étant traitée à l'hydrogène ou au césium pour diminuer son affinité électronique.

9. Système de détection selon l'une quelconque des revendications 1 à 8, **caractérisé en ce que** le multiplicateur d'électrons (20) comprend, en outre, une galette de micro-canaux (22) disposée en aval de la couche de diamant nanocristallin (21) suivant le sens général de propagation des électrons.

10. Système de détection selon la revendication 9, **caractérisé en ce que** la couche de diamant nanocristallin (21) est disposée au contact de la galette de micro-canaux (22), ou est disposée à une distance de celle-ci comprise entre 5µm et 500µm.

11. Système de détection selon l'une quelconque des revendications 1 à 10, **caractérisé en ce que** le dispositif de sortie (30) comprend une face réceptrice (31) d'électrons secondaires, la couche de diamant nanocristallin (21) étant disposée au contact de ladite face réceptrice (31) du dispositif de sortie (30), ou est disposée à une distance de celle-ci comprise entre 5µm et 500µm.

12. Système de détection selon l'une quelconque des revendications 1 à 11, **caractérisé en ce que** le multiplicateur d'électrons (20) comprend une pluralité desdites couches de diamant nanocristallin (21) disposées les unes sur les autres suivant le sens général de propagation des électrons, et espacées les unes des autres.

13. Système de détection selon l'une quelconque des revendications 1 à 12, **caractérisé en ce que** le système de détection est un tube photomultiplicateur, le dispositif de sortie (30) comprenant au moins une anode.

14. Système de détection selon l'une quelconque des revendications 1 à 12, **caractérisé en ce que** le système de détection est un tube intensificateur d'image, le dispositif de sortie (30) comprenant un écran phosphore, un capteur CCD, ou un capteur CMOS.

15. Système de détection selon l'une quelconque des revendications 13 ou 14, **caractérisé en ce que** le système de détection est un tube photomultiplicateur ou intensificateur d'image, le dispositif d'entrée (10) comprenant une photocathode formée de SbK₂Cs ou de GaAs.

16. Système de détection selon l'une quelconque des revendications 1 à 12, **caractérisé en ce que** le système de détection est un tube de détection d'un flux ionique, le dispositif de sortie (30) comprenant au moins une anode.

## Patentansprüche

1. System zur Erfassung einer elektromagnetischen Strahlung oder eines lonenflusses, umfassend:
- eine Eingangsvorrichtung (10) zum Empfangen der Elektronenstrahlung oder des lonenflusses und zum Aussenden sogenannter Primärelektronen in Antwort hierauf,
- einen Transmissions-Elektronenvervielfacher (20) zum Empfangen der Primärelektronen und zum Aussenden sogenannter Sekundärelektronen in Antwort hierauf, und
- eine Ausgangsvorrichtung (30) zum Empfangen der Sekundärelektronen und zum Aussenden eines Ausgangssignals in Antwort hierauf,
**dadurch gekennzeichnet, dass** der Elektronenvervielfacher (20) wenigstens eine nanokristalline Diamantschicht (21) enthält, die mit Bor mit einer Konzentration größer als 5.10¹⁹cm⁻³ dotiert ist.

2. System zur Erfassung nach Anspruch 1, **dadurch gekennzeichnet, dass** die nanokristalline Diamantschicht (21) eine Bor-Dotierkonzentration größer als 2.10²⁰cm⁻³ aufweist.

3. System zur Erfassung nach Anspruch 1 oder 2, **dadurch gekennzeichnet, dass** die Dicke der nanokristallinen Diamantschicht (21) zwischen 0,1 µm und 10 µm enthalten ist.

4. System zur Erfassung nach einem der Ansprüche 1-3, **dadurch gekennzeichnet, dass** die nanokristalline Diamantschicht (21) durch chemische Dampfphasenabscheidung gebildet ist.

5. System zur Erfassung nach einem der Ansprüche 1-4, **dadurch gekennzeichnet, dass** die nanokristalline Diamantschicht (21) eine stromaufwärtige Seite (21 E) zum Empfangen einfallender Elektronen und eine stromabwärtige Seite (21 S) zum Aussenden der Sekundärelektronen in Antwort hierauf umfasst, wobei die stromaufwärtige Seite (21 E) eine Löchersammelelektrode (23) umfasst, die dazu ausgelegt ist, auf ein elektrisches Potenzial gebracht zu sein.

6. System zur Erfassung nach Anspruch 5, **dadurch gekennzeichnet, dass** die Sammelelektrode (23) am Rand der stromaufwärtigen Seite (21 E) angeordnet ist oder sich im Wesentlichen über die gesamte stromaufwärtige Seite (21E) erstreckt.

7. System zur Erfassung nach einem der Ansprüche 1-6, **dadurch gekennzeichnet, dass** ein elektrisches Feld, das im Inneren der nanokristallinen Diamantschicht (21) vorhanden ist, kleiner oder gleich 10kv/cm ist.

8. System zur Erfassung nach einem der Ansprüche 1-7, **dadurch gekennzeichnet, dass** die nanokristalline Diamantschicht (21) eine stromabwärtige Seite (21 S) zum Aussenden der Sekundärelektronen aufweist, wobei die stromabwärtige Seite (21 S) mit Wasserstoff oder mit Cäsium behandelt ist, um ihre Elektronenaffinität zu verringern.

9. System zur Erfassung nach einem der Ansprüche 1-8, **dadurch gekennzeichnet, dass** der Elektronenvervielfacher (20) ferner eine Mikrokanalplatte (22) umfasst, die stromabwärts der nanokristallinen Diamantschicht (21) in der allgemeinen Ausbreitungsrichtung der Elektronen angeordnet ist.

10. System zur Erfassung nach Anspruch 9, **dadurch gekennzeichnet, dass** die nanokristalline Diamantschicht (21) in Kontakt mit der Mikrokanalplatte (22) angeordnet ist, oder in einem Abstand von dieser angeordnet ist, der zwischen 5 µm und 500 µm enthalten ist.

11. System zur Erfassung nach einem der Ansprüche 1-10, **dadurch gekennzeichnet, dass** die Ausgangsvorrichtung (30) eine Sekundärelektronen-Empfangsseite (31) umfasst, wobei die nanokristalline Diamantschicht (21) in Kontakt mit der Empfangsseite (31) der Ausgangsvorrichtung (30) angeordnet ist, oder in einem Abstand von dieser angeordnet ist, der zwischen 5µm und 500 µm enthalten ist.

12. System zur Erfassung nach einem der Ansprüche 1-11, **dadurch gekennzeichnet, dass** der Elektronenvervielfacher (20) eine Mehrzahl der nanokristallinen Diamantschichten (21) umfasst, die in der allgemeinen Ausbreitungsrichtung der Elektronen aufeinander angeordnet und voneinander beabstandet sind.

13. System zur Erfassung nach einem der Ansprüche 1-12, **dadurch gekennzeichnet, dass** das System zur Erfassung eine Fotovervielfacherröhre ist, wobei die Ausgangsvorrichtung (30) wenigstens eine Anode umfasst.

14. System zur Erfassung nach einem der Ansprüche 1-12, **dadurch gekennzeichnet, dass** das System zur Erfassung eine Bildverstärkerröhre ist, wobei die Ausgangsvorrichtung (30) einen Leuchtstoffschirm, einen CCD-Sensor oder einen CMOS-Sensor umfasst.

15. System zur Erfassung nach einem der Ansprüche 13 oder 14, **dadurch gekennzeichnet, dass** das System zur Erfassung eine Fotovervielfacherröhre oder eine Bildverstärkerröhre ist, wobei die Eingangsvorrichtung (10) eine Fotokathode umfasst, die aus SbK₂Cs oder aus GaAs gebildet ist.

16. System zur Erfassung nach einem der Ansprüche 1-12, **dadurch gekennzeichnet, dass** das System zur Erfassung eine Röhre zur lonenflusserfassung ist, wobei die Ausgangsvorrichtung (30) wenigstens eine Anode umfasst.

## Claims

1. System for detecting an electromagnetic radiation or an ion flow comprising:
- an input device (10), for receiving the electronic radiation or the ion flow and emitting so-called primary electrons in response,
- a multiplier (20) of electrons in transmission for receiving the primary electrons and emitting so-called secondary electrons in response, and
- an output device (30), for receiving the secondary electrons and emitting an output signal in response,
**characterised in that** said electron multiplier (20) comprises at least one nanocrystalline diamond layer (21) doped with boron in a concentration of higher than 5.10¹⁹cm⁻³.

2. Detection system according to claim 1, **characterised in that** said nanocrystalline diamond layer (21) has a boron doping concentration higher than 2.10²¹cm⁻¹.

3. Detection system according to claim 1 or 2, **characterised in that** the thickness of the nanocrystalline diamond layer (21) is comprised between 0.1µm and 10µm.

4. Detection system according to any of claims 1 to 3, **characterised in that** said nanocrystalline diamond layer (21) is formed by chemical vapour deposition.

5. Detection system according to any of claims 1 to 4, **characterised in that** the nanocrystalline diamond layer (21) comprises an upstream face (21E) for receiving incident electrons, and a downstream face (21S) for emitting secondary electrons in response, said upstream face (21E) comprising a hole collection electrode (23) intended to be taken to an electrical potential.

6. Detection system according to claim 5, **characterised in that** said collection electrode (23) is situated at the edge of said upstream face (21E), or extends substantially over the entire upstream face (21E).

7. Detection system according to any of claims 1 to 6, **characterised in that** an electric field, present inside the nanocrystalline diamond layer (21), is less than or equal to 10kV/cm.

8. Detection system according to any of claims 1 to 7, **characterised in that** the nanocrystalline diamond layer (21) has a downstream face (21S) to emit secondary electrons, said downstream face (21S) being treated with hydrogen or with caesium to reduce its electron affinity.

9. Detection system according to any of claims 1 to 8, **characterised in that** the electron multiplier (20) comprises, moreover, a microchannel plate (22) arranged downstream of the nanocrystalline diamond layer (21) along the general direction of propagation of the electrons.

10. Detection system according to claim 9, **characterised in that** the nanocrystalline diamond layer (21) is arranged in contact with the microchannel plate (22), or is arranged at a distance therefrom comprised between 5µm and 500µm.

11. Detection system according to any of claims 1 to 10, **characterised in that** the output device (30) comprises a face (31) for receiving secondary electrons, the nanocrystalline diamond layer (21) being arranged in contact with said receiving face (31) of the output device (30), or is arranged at a distance therefrom comprised between 5µm and 500µm.

12. Detection system according to any of claims 1 to 11, **characterised in that** the electron multiplier (20) comprises a plurality of said nanocrystalline diamond layers (21) arranged one on the other along the general direction of propagation of the electrons, and spaced apart from each other.

13. Detection system according to any of claims 1 to 12, **characterised in that** the detection system is a photomultiplier tube, the output device (30) comprising at least one anode.

14. Detection system according to any of claims 1 to 12, **characterised in that** the detection system is an image intensifier tube, the output device (30) comprising a phosphor screen, a CCD sensor, or a CMOS sensor.

15. Detection system according to any of claims 13 or 14, **characterised in that** the detection system is a photomultiplier tube or image intensifier, the input device (10) comprising a photocathode formed of SbK₂Cs or GaAs.

16. Detection system according to any of claims 1 to 12, **characterised in that** the detection system is a tube for detecting an ion flow, the output device (30) comprising at least one anode.
